# EUROPEAN PATENT SPECIFICATION

(11) **EP 2 184 211 B1**
(45) Date of publication and mention of the grant of the patent: **23.07.2014**
(21) Application number: 10155648.8
(22) Date of filing: 31.03.2008
(51) Int. Cl.: B60S 9/12

(54) **Hydraulic system for levelling a vehicle**
Hydraulisches System zum Nivellieren eines Fahrzeuges
Système hydraulique pour niveller un véhicule

(30) Priority: 04.04.2007 NL 1033643
(43) Date of publication of application: 12.05.2010
(62) Divisional of application: 08075227.2
(73) Proprietor: Actuant Corporation, Glendale, Wisconsin 53209-3703 (US)
(72) Inventor: Meyer, Bernardus Martinus Emanuel, 7586 GG Overdinkel (NL); Beld, Petrus Everhardus Johannes, 7637 PC Oud Ootmarsum (NL); Kooistra, Ronald, 7521 ZS Enschede (NL)
(74) Representative: Brookhuis, Hendrik Jan Arnold

(56) References cited:
- EP-A- 1 000 828
- EP-A- 1 026 057
- US-A1- 2005 127 343
- US-B1- 6 991 221
- US-B1- 7 044 445

## Description

The invention relates to a hydraulic system for levelling a vehicle, in particular a towed vehicle.

In particular, the invention relates to such a system for a caravan or a trailer having a chassis which is provided with one or more wheel axles, as well as a base plate mounted on the chassis.

Hydraulic systems are known from the prior art, for example from EP 1 000 828 or from EP 1 026 057, which serve to place the caravan or trailer in a stable horizontal position on uneven and/or inclined terrain.

Known hydraulic systems comprise several hydraulically operated supports which can be fitted on the underside of the vehicle and which can rest on the ground. Furthermore, the known systems are provided with a hydraulic pump assembly having a tank for hydraulic fluid, a hydraulic pump with associated electric driving motor, and a valve block with one or more electrically actuable valves. Lines, usually flexible hydraulic hoses, connect the supports and the pump assembly to one another, and if the supports are connected in parallel, they connect the supports to one another.

The known hydraulic systems furthermore comprise control electronics for driving the driving motor and the one or more electrically actuable valves.

These known systems do not operate satisfactorily.

For example, the fact that it is difficult to incorporate the known systems in the assembly process of caravans is a problem for the caravan market. This makes it relatively costly and thus relatively unattractive for the market in question to incorporate a system in a caravan.

It is an object of the first aspect of the invention to provide a system which can be fitted to the vehicle, in particular the caravan, in a simple manner, in particular during the assembly process.

Another problem of the known systems relates to the automatic levelling of the vehicle. In particular with caravans and other towed vehicles wherein the one or more wheel axles are situated in a central region of the vehicle, one aspect is that the chassis, and any possible superstructure, are relatively lightweight and therefore weak and consequently susceptible to torsion. Known automatic levelling systems have routines for operating the hydraulic supports which have proved to be unsatisfactory in this respect and cause a torsional load which is too high. It is an object of the second aspect of the invention to provide a solution to this problem.

Document EP-A-1026057 discloses a method according to the preamble of claim 1.

According to a first aspect, the invention provides a method for automatically levelling a vehicle, in particular a towed vehicle, such as a caravan or a trailer, which vehicle has a chassis with one or more wheel axles, which system comprises:
- a plurality of hydraulically operated supports which can be fitted to the underside of the vehicle and which can rest on the ground;
- a hydraulic pump assembly comprising:
   - a tank for hydraulic fluid;
   - a hydraulic pump with associated electric driving motor,
   - a valve block with one or more electrically actuable valves,
   which system furthermore comprises control electronics for driving the driving motor and the one or more electrically actuable valves, and
   which system furthermore comprises hydraulic lines, which connect the hydraulically operated supports to the hydraulic pump unit and, if desired, to one another,
   **characterized in that**
   the control electronics and the hydraulic pump assembly are accommodated in a splash-proof box which can be fitted on the bottom of the underside of the vehicle. With this system, it is provided that the control electronics and the hydraulic pump assembly are accommodated in a splash-proof box which is fitted in a simple manner to the bottom of the vehicle, preferably on the bottom of the base plate, if present.

Preferably, it is provided that the control electronics and the hydraulic pump assembly are fitted in the box beforehand, and are preferably also filled with hydraulic fluid, and this pre-fitted combination is supplied as a single unit during the assembly process of the vehicle, in particular with caravans. In that case, the box serves both as protection and as mounting means for the components which are fitted inside.

If the pump, tank and valve block are prefilled with hydraulic fluid, but the hoses or other lines to the supports are fitted later, removable caps or the like are preferably provided on the connections for the hoses.

It is also preferably provided that the hydraulic supports are supplied prefilled with hydraulic fluid during the assembly process of the caravan.

In one possible embodiment, the hoses or other lines are fitted during the assembly process of the caravan, which hoses are then connected by means of suitable couplings, for example union couplings, to the other hydraulic components.

The base plate, which is often made of wooden material, for example plywood, can be secured to the base plate, preferably by means of screws.

The second aspect of the invention provides a system for levelling a vehicle, in particular a towed vehicle, such as a caravan or a trailer, which vehicle has a chassis with one or more wheel axles, and, if desired, a base plate fitted to the chassis, wherein the vehicle furthermore, if desired, has a height-adjustable, for example hand-operated nose wheel, which system comprises:
- two hydraulically operated lifting supports, which can be fitted on an axle of the vehicle or on the chassis near an axle at positions which are arranged at a distance from one another in the width direction of the vehicle, as well as at least one hydraulically operated front stabilizing support which can be fitted near the front side of the vehicle and a hydraulically operated rear stabilizing support which can be fitted near the rear side of the vehicle,
- a hydraulic pump assembly comprising:
   - a tank for hydraulic fluid;
   - a hydraulic pump with associated electric driving motor,
   - a valve block with one or more electrically actuable valves,
   which system furthermore comprises control electronics with an electronic tilting sensor for driving the driving motor and the one or more electrically actuable valves, and which system furthermore comprises hydraulic lines, which connect the supports to the hydraulic pump unit,
in which the control electronics are designed to produce an automatic levelling routine, **characterized in that** the automatic levelling routine comprises (starting from a starting position in which the vehicle is tilting forwards, which is preferably adjusted using the nose wheel):
(a) operating the one or more front stabilizing supports until the vehicle is level in the longitudinal direction;
b) operating the one or more rear stabilizing supports until the vehicle is stabilized in the longitudinal direction;
c) operating the lifting support on the side of the vehicle which is lower, viewed in the width direction, until the vehicle is level in the width direction, and continuing said operation until the vehicle is slightly lifted up on that side;
d) operating the other lifting support until the vehicle is level in the width direction;
e) operating the one or more stabilizing supports on the side which is lower, viewed in the longitudinal direction, until the vehicle is level in the longitudinal direction;
f) operating the one or more other stabilizing supports until the vehicle is stable in the longitudinal direction.

The invention furthermore relates to a road vehicle which can be towed by a towing vehicle, such as a caravan or trailer, comprising a chassis with, if desired, a base plate fitted thereon, wherein the vehicle is provided with one or more aspects of the invention.

The invention also relates to a method for assembling caravans in which use is made of one or more aspects of the invention.

The various aspects of the invention will be explained with reference to the drawing, in which:
Fig. 1 shows a perspective view of the chassis of a caravan and an exemplary embodiment of the system according to the invention;
Fig. 2 shows the hydraulic circuit of the system from Fig. 1;
Fig. 3 shows a hydraulic stabilizing support according to the invention;
Fig. 4 shows an unclaimed alternative support for the system.

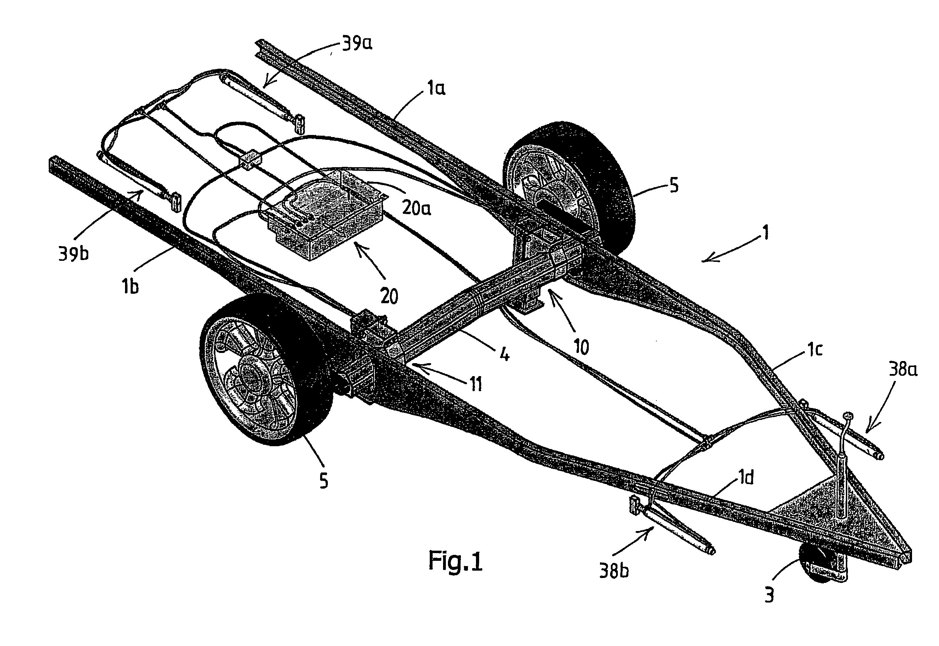

Fig. 1 shows the undercarriage of a caravan which is not shown in any further detail. The undercarriage comprises a chassis 1 which has in this example, as is usual, two metal longitudinal beams 1 a,b which continue towards their front end to form two V-shaped poles 1c,d which are directed towards one another. At the front end of the chassis 1, a towing hook is present (not shown) as well as a height-adjustable nose wheel 3.

The longitudinal beams 1 a,b have a central portion, the height of which is greater than that of the ends of said longitudinal beams 1 a,b and at said central portion the wheel axle 4 with wheels 5 is attached to the longitudinal beams 1a,b.

A base plate is fitted to the chassis 1, which base plate forms the floor of the caravan. Said plate is generally made from wooden material, such as plywood.

Furthermore, Fig. 1 diagrammatically shows the hydraulic system for levelling the caravan.

In this example, as is preferred, two hydraulically operated lifting supports 10, 11 are provided, each of which is in this case directly attached to the axle 5 by means of a bracket at positions which are arranged at a distance from one another in the width direction of the vehicle. Alternatively, the lifting supports 10, 11 could be attached to the section where the height of the longitudinal beams 1a,b is increased, as these sections are sufficiently rigid.

The lifting supports 10, 11 are in this case of a telescopic design having a stationary part (which is attached to the axle 5) and a part which can be extended straight downwards and has a footplate. A hydraulic cylinder, which is not visible in Fig. 1, is accommodated in each lifting support.

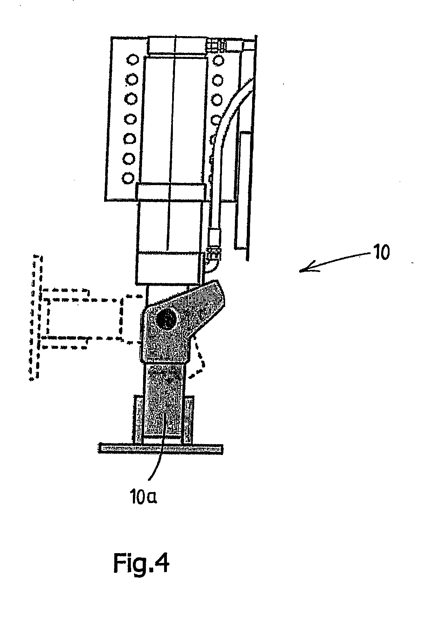

Fig. 4 shows a known alternative lifting support 10 which is marketed by the US company Kwikee as a "knee-acting jack". This support has a bottom supporting part with a footplate which supporting part can be pivoted about a pivot 10 and is substantially horizontal when the lifting support is retracted and points downwards when the lifting support is extended. This embodiment allows for a greater ground clearance.

The lifting supports 10, 11 and the hydraulic system are designed in such a manner that a lifting support can preferably support at least the weight of the entire caravan.

Near the front side of the base plate of the caravan, a pair of hydraulically operated front stabilizing supports is provided and on the rear side of the base plate, a pair of hydraulically operated rear stabilizing supports is provided, at a distance in front of and behind the axle 5, respectively, of which only the associated hydraulic cylinders 38a,b and 39a,b are shown in Fig. 1.

With each pair of stabilizing supports, the supports are arranged at a distance from one another in the width direction.

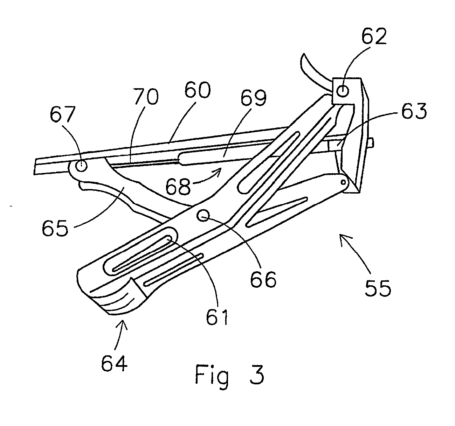

The stabilizing supports are preferably designed in accordance with the construction which is described with reference to Fig. 3.

Fig. 1 furthermore shows a box 20 which forms part of the levelling system and which is designed to be fitted to the underside of the base plate.

The box 20 contains a pre-assembled hydraulic pump assembly comprising a tank for hydraulic fluid, a hydraulic pump with an associated electric driving motor, and a valve block comprising one or more electrically actuable valves.

The box 20 furthermore comprises assembled control electronics for driving the driving motor and the one or more electrically actuable valves. The control electronics in the box 20 comprise an electronic tilting sensor.

When fitted to the base plate, the box 20 is splash-proof, with the electronics preferably being arranged so as to be waterproof.

Said components are pre-fitted to the body of the box 20, so that the box 20 ultimately serves as the mounting means for these components to the caravan. As is preferred, these components are prefilled with hydraulic fluid and, as is furthermore preferred, the correct operation is tested before the pre-assembled box 20 containing the components is supplied as a single unit to the assembly process of the caravan.

As can be seen, the box 20 in this case has a peripheral edge with a mounting flange 20a provided with holes for screws and the like, which can, for example, be screwed directly into the plywood base plate. In this case, the box 20 is open at the top side, it being possible to provide further sealing along the top edge by means of a sealing ring and/or applying sealant/glue. In one variant, the box 20 has a lid.

The system furthermore comprises hydraulic lines, which lines are here passed through splash-proof ducts in the box.

Preferably, it is provided that the system comprises a hand-holdable remote control with wireless communication means, so that wireless communication with the control electronics in the box 20 is possible. This avoids having to provide a separate operating cable during assembly of the caravan.

The box 20 here has a height which is such that the underside of the box is higher than the underside of the axle 5. Furthermore, the box 20 is preferably positioned behind the axle 5. In this way, the box is protected as much as possible against damage.

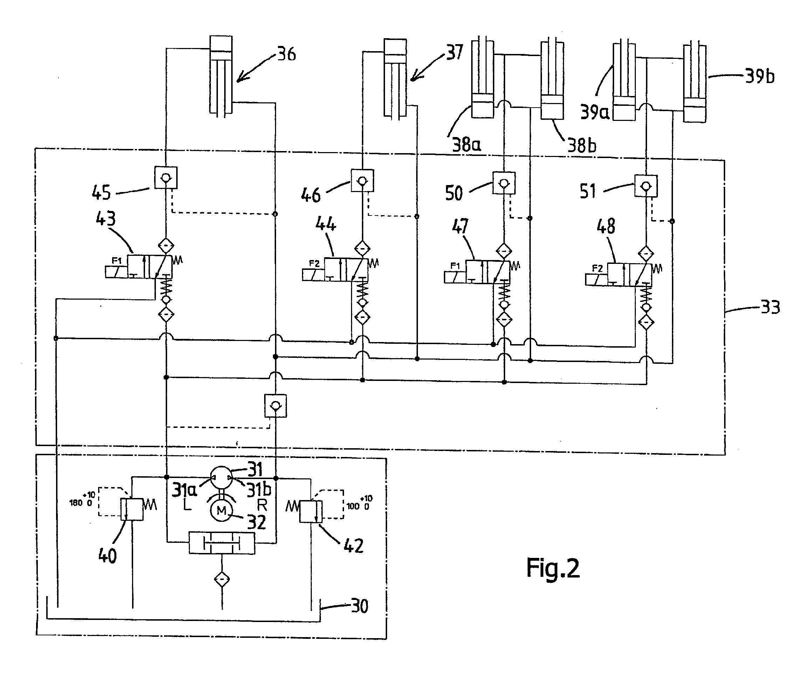

An example of the hydraulic system will now be explained in more detail with reference to the diagram in Fig. 2.

Fig. 2 shows a hydraulic pump assembly with a tank 30 for hydraulic fluid, a hydraulic pump 31 with an associated electric driving motor 32, and with a valve block 33 comprising one or more electrically actuable valves.

The control electronics for driving the driving motor 32 and the one or more electrically actuable valves are not shown in Fig. 2.

Furthermore, Fig. 2 shows the hydraulic cylinders 36, 37 of the lifting supports 9, 10 and the cylinders 38a,b, 39a,b of the front and rear stabilizing supports, respectively.

The cylinders 36-39 are in this case designed as double-acting cylinders with a housing and a piston rod which protrudes outwards at a single axial end of the housing. The piston rod then forms a bottom-side chamber and a piston-rod-side chamber in each cylinder.

The pump 31 is a reversible pump having a first and a second port 31 a, 31 b which, depending on the direction of rotation of the driving motor, serve as suction port or pressure port.

Furthermore, a first pressure-limiting valve 40, associated with the first port 31 a, and a second pressure-limiting valve 41, associated with the second port 31 b are provided, which first pressure-limiting valve 40 opens at a pressure which is significantly higher than the pressure at which the second pressure-limiting valve 41 opens, for example at least 30 bar higher.

The cylinder 36 or 37 in each lifting support 9, 10 is arranged in such a manner that the supply of hydraulic fluid to the bottom-side chamber thereof results in a lifting movement of the lifting support. In this way, the largest active piston surface is available for the lifting movement.

Between the first port 31 a of the pump 31 and the bottom-side chamber of the cylinder, a separate electrically actuable valve, in this case 43, 44, is provided at the cylinder 36, 37 of each lifting support.

Furthermore, a hydraulically operated non-return valve 45, 46 (POCV) is arranged between the first port 31 a and the bottom-side chamber of the cylinder 36 or 37 of each lifting support, which hydraulically operated non-return valve 45, 46 (POCV) closes in the direction towards the first port 31 a and opens on the basis of a control pressure when hydraulic fluid is supplied under pressure to the rod-side chamber of the cylinder 36 or 37 of the lifting support (i.e. when the lifting support 9, 10 is retracted on command).

As Figs. 1 and 2 show, the cylinders of each pair of stabilizing supports on the front side and on the rear side of the vehicle are connected in parallel by means of lines, with a separate electrically actuable valve 47, 48 being associated with each pair.

The cylinders 38a,b and 39a,b are in this case arranged in such a manner that, in order to move the stabilizing support in question towards the ground, hydraulic fluid is supplied to the rod-side chamber, that is to say, the piston rod slides inwards. Thus, the relatively small piston surface is therefore available, which, as is preferred, has been done in order to limit the force which is to be exerted by the cylinders 38a,b and 39a,b. This, in combination with a suitable design of the stabilizing support, can result in the stabilizing support not being able to overload and/or twist the caravan.

In this case, a hydraulically operated non-return valve 50, 51 (POCV) is in each case provided in the connection between the respective valve 47, 48 and the rod-side chambers of the cylinder pairs 38a,b and 39a,b, which hydraulically operated non-return valve 50, 51 (POCV) closes in the direction towards the first port 31 a and opens on the basis of a control pressure when hydraulic fluid is supplied under pressure to the bottom-side chambers of the cylinder pair.

Fig. 2 shows that all electrically actuable valves 45, 46, 47, 48 are of the normally open type, so that, when the electrical servo-mechanism of said valves fails, the supports can be moved upwards, preferably by operation of the pump. For example, when a failure occurs in the control electronics or in one or more valves, all supports can be moved off the ground, provided the pump works in the direction of the port 31 b.

Preferably, the control electronics, which preferably comprise a microprocessor and a memory, are designed to produce an automatic levelling routine. This means that upon arrival at a campsite, said routine can be switched on and the caravan is then placed in the desired horizontal position in an automatic and stable manner.

Preferably, it is provided that there is a routine, the starting point of which is that the caravan is tilting slightly forwards, which can be adjusted using the nose wheel. At the start of the routine, the tilting sensor detects whether the caravan is in said starting position. If this is the case, the following routine is preferably carried out:
a) operating the one or more front stabilizing supports until the vehicle is level in the longitudinal direction;
b) operating the one or more rear stabilizing supports until the vehicle is stabilized in the longitudinal direction;
c) operating the lifting support on the side of the vehicle which is lower, viewed in the width direction, until the vehicle is level in the width direction, and continuing said operation until the vehicle is slightly lifted up on that side;
d) operating the other lifting support until the vehicle is level in the width direction;
e) operating the one or more stabilizing supports on the side which is lower, viewed in the longitudinal direction, until the vehicle is level in the longitudinal direction;
f) operating the one or more other stabilizing supports until the vehicle is stable in the longitudinal direction.

By means of this routine, the caravan is placed in the desired position in a reliable and safe manner, while avoiding excessive forces on the caravan.

Continued operation of the lifting support in step c), for example for a predetermined short period of time (for example 2 seconds), leads to the chassis being pushed "off the suspension". The same happens again by operating the other lifting support until the horizontal position is reached in the width direction. In addition, this ensures that "the weight" of the caravan is borne, as it were, by the lifting supports and not, therefore, by the stabilizing supports (which would result in undesirable torsion).

Preferably, the control electronics are furthermore designed to produce an automatic return routine, which comprises:
a) briefly and partly lifting the one or more front and rear stabilizing supports on the front side and rear side, if desired in sequence,
b) completely lifting both lifting supports;
c) completing the lifting of the front and rear stabilizing supports.

The control electronics could furthermore be designed to carry out a calibration routine, in which the instantaneous position of the vehicle is stored in the memory of the control electronics as the desired level position. This may, in particular, in the electronics, make it also possible to operate each lifting support and/or (pair) of stabilizing supports separately and manually (by means of the remote control), so that it is possible to choose a position and then store this in the memory.

Fig. 3 shows the hydraulically operated stabilizing support 55 which is preferably used and which can be fitted in the positions indicated in Fig. 1. The support 55 is intended to be fitted directly on the bottom of the base plate of the caravan.

The stabilizing support 55 has a guide 60 which is to be attached to the base plate, a pivotable stabilizing arm 61 which, at its top end, is attached around a pivot axis 62 to the guide 60 and which is designed to rest on the ground with its bottom end 64.

The support 55 furthermore has an intermediate arm 65 which, at one end, at 66, is hingedly attached to the stabilizing arm 61, in this case in a middle region of this arm 61, and, at the other end, is slidably guided with respect to the guide 60, in this case by means of a sliding element 67.

Furthermore, a double-acting hydraulic cylinder 68 (in accordance with the cylinders 38a,b and 39a,b) with a housing 69 and a piston rod 70 protruding from the housing at one end is provided, in which the housing 69 is attached by its bottom side, at 63, to the guide 60, near the hinged attachment of the stabilizing arm 61, and wherein the piston rod 70 is attached to the slidably guided end with sliding element 67 of the intermediate arm 65.

Thus, the piston rod 70 will be extended in the "folded-away position" of the stabilizing support. Preferably, in this case, it is provided that the intermediate arm and/or the stabilizing arm are partially U-shaped and then cover the piston rod, so that the piston rod is (to some degree) protected.

It will be clear that the invention has in this case only been explained with reference to a caravan by way of illustration. It is also possible to use one or more aspects of the invention for a vehicle which is not towed. The invention is, for example, also suitable for a trailer, for example, a trailer with road information which is to be positioned along the road.

## Claims

1. A method for automatically levelling a vehicle, in particular a towed vehicle, such as a caravan or a trailer, which vehicle has a chassis with one or more wheel axles, wherein use is made of a hydraulic system comprising:
- two hydraulically operated lifting supports, which can be fitted on an axle of the vehicle or on the chassis near an axle at positions which are arranged at a distance from one another in the width direction of the vehicle, as well as at least one hydraulically operated front stabilizing support which can be fitted near the front side of the vehicle and a hydraulically operated rear stabilizing support which can be fitted near the rear side of the vehicle,
- a hydraulic pump assembly comprising:
- a tank for hydraulic fluid;
- a hydraulic pump with associated electric driving motor,
- a valve block with one or more electrically actuable valves,
which system furthermore comprises control electronics for driving the driving motor and the one or more electrically actuable valves, and
which system furthermore comprises hydraulic lines, which connect the supports to the hydraulic pump unit, **characterized in that** the system comprises an electronic tilting sensor and **in that** starting from a starting position in which the vehicle is tilting forwards, the method comprises the following steps which are carried out by the control electronics:
(a) operating the one or more front stabilizing supports until the vehicle is level in the longitudinal direction;
b) operating the one or more rear stabilizing supports until the vehicle is stabilized in the longitudinal direction;
c) operating the lifting support on the side of the vehicle which is lower, viewed in the width direction, until the vehicle is level in the width direction, and continuing said operation until the vehicle is slightly lifted up on that side;
d) operating the other lifting support until the vehicle is level in the width direction;
e) operating the one or more stabilizing supports on the side which is lower, viewed in the longitudinal direction, until the vehicle is level in the longitudinal direction;
f) operating the one or more other stabilizing supports until the vehicle is stable in the longitudinal direction.

2. A method according to claim 1, wherein after levelling the vehicle, an automatic return routine is carried out by the control electronics, which automatic return routine comprises the following steps:
a) briefly and partly lifting the one or more front and rear stabilizing supports on the front side and rear side, if desired in sequence,
b) completely lifting both lifting supports;
c) completing the lifting of the front and rear stabilizing supports.

3. A hydraulic system for a vehicle, in particular a towed vehicle, such as a trailer or a caravan, which vehicle has a chassis with one or more wheel axles, which system comprises:
- two hydraulically operated lifting supports, which can be fitted on an axle of the vehicle or on the chassis near an axle at positions which are arranged at a distance from one another in the width direction of the vehicle, as well as at least one hydraulically operated front stabilizing support which can be fitted near the front side of the vehicle and a hydraulically operated rear stabilizing support which can be fitted near the rear side of the vehicle,
- a hydraulic pump assembly comprising:
- a tank for hydraulic fluid;
- a hydraulic pump with associated electric driving motor,
- a valve block with one or more electrically actuable valves,
which system furthermore comprises control electronics with an electronic tilting sensor for deriving the driving motor and the one or more electrically actuable valves, and
which system furthermore comprises hydraulic lines, which connect the supports to the hydraulic pump unit,
**characterized in that**
the control electronics are configured to carry out the method according to claim 1 or 2.

4. Vehicle, in particular a vehicle which can be towed, such as a caravan or trailer, comprising a chassis with, if desired, a base plate fitted thereon, **characterized in that** the vehicle is provided with a system according to claim 3.

## Patentansprüche

1. Verfahren zum automatischen Nivellieren eines Fahrzeugs, insbesondere eines geschleppten Fahrzeugs wie etwa ein Wohnwagen oder ein Anhänger, wobei das Fahrzeug ein Fahrgestell mit einer oder mehreren Radachsen aufweist, wobei ein Hydrauliksystem benutzt wird, das aufweist:
- zwei hydraulisch betätigte Hebestützen, die an einer Achse des Fahrzeugs oder an dem Fahrgestell in der Nähe einer Achse an Positionen, die in einem Abstand voneinander in der Breitenrichtung des Fahrzeugs angeordnet sind, angebracht werden können, sowie mindestens eine hydraulisch betätigte vordere Stabilisierstütze, die in der Nähe der Vorderseite des Fahrzeugs angebracht werden kann, und eine hydraulisch betätigte hintere Stabilisierstütze, die in der Nähe der Rückseite des Fahrzeugs angebracht werden kann,
- eine Hydraulikpumpenanordnung, umfassend:
- einen Behälter für Hydraulikflüssigkeit;
- eine Hydraulikpumpe mit zugehörigem, elektrischem Antriebsmotor;
- einen Steuerkasten mit mindestens einem elektrisch betätigbaren Ventil;
wobei das System außerdem Steuerelektronik zum Ansteuern des Antriebsmotors und des mindestens einen elektrisch betätigbaren Ventils umfasst, und
wobei das System ferner Hydraulikleitungen aufweist, die die Stützen mit der Hydraulikpumpeneinheit verbinden, **dadurch gekennzeichnet, dass** das System einen elektronischen Kippsensor aufweist, und dadurch, dass beginnend von einer Ausgangsstellung, in der sich das Fahrzeug nach vorn neigt, das Verfahren die folgenden Schritte umfasst, die durch die Steuerelektronik ausgeführt werden:
(a) Betätigen der einen oder mehreren vorderen Stabilisierstützen, bis das Fahrzeug in der Längsrichtung auf gleiche Höhe ausgerichtet ist;
(b) Betätigen der einen oder mehreren hinteren Stabilisierstützen, bis das Fahrzeug in der Längsrichtung stabilisiert ist;
(c) Betätigen der Hebestütze auf der Seite des Fahrzeugs, die bei Betrachtung in der Breitenrichtung niedriger ist, bis das Fahrzeug in der Breitenrichtung gleich hoch ist; und Fortsetzen der Betätigung, bis das Fahrzeug auf dieser Seite leicht hochgehoben ist;
(d) Betätigen der anderen Hebestütze, bis das Fahrzeug in der Breitenrichtung auf gleiche Höhe ausgerichtet ist;
(e) Betätigen der einen oder mehreren Stabilisierstützen auf der Seite, die bei Betrachtung in der Längsrichtung niedriger ist, bis das Fahrzeug in der Längsrichtung auf gleiche Höhe ausgerichtet ist;
(f) Betätigen der einen oder mehreren anderen Stabilisierstützen, bis das Fahrzeug in der Längsrichtung stabil ist.

2. Verfahren nach Anspruch 1, wobei nach dem Nivellieren des Fahrzeugs eine automatische Rückkehrroutine durch die Steuerelektronik ausgeführt wird, wobei eine automatische Rückkehrroutine die folgenden Schritte umfasst:
a) kurzes und teilweises Anheben der einen oder mehreren vorderen und hinteren Stabilisierstützen auf der Vorderseite und Rückseite, auf Wunsch der Reihe nach;
b) vollständiges Anheben beider Hebestützen;
c) Beenden des Anhebens der vorderen und hinteren Stabilisierstützen.

3. Hydrauliksystem für ein Fahrzeug, insbesondere ein geschlepptes Fahrzeug, wie etwa ein Anhänger oder ein Wohnwagen, wobei das Fahrzeug ein Fahrgestell mit einer oder mehreren Radachsen aufweist, wobei das System umfasst:
- zwei hydraulisch betätigte Hebestützen, die an einer Achse des Fahrzeugs oder an dem Fahrgestell in der Nähe einer Achse an Positionen, die in einem Abstand voneinander in der Breitenrichtung des Fahrzeugs eingerichtet sind, angebracht werden können, sowie mindestens eine hydraulisch betätigte vordere Stabilisierstütze, die in der Nähe der Vorderseite des Fahrzeugs angebracht werden kann, und eine hydraulisch betätigte hintere Stabilisierstütze, die in der Nähe der Rückseite des Fahrzeugs angebracht werden kann,
- eine Hydraulikpumpenanordnung, umfassend:
- einen Behälter für Hydraulikflüssigkeit;
- eine Hydraulikpumpe mit zugehörigem, elektrischem Antriebsmotor;
- einen Steuerkasten mit mindestens einem elektrisch betätigbaren Ventil;
wobei das System außerdem Steuerelektronik mit einem elektronischen Kippsensor zum Ansteuern des Antriebsmotors und des mindestens einen elektrisch betätigbaren Ventils umfasst, und
wobei das System ferner Hydraulikleitungen aufweist, die die Stützen mit der Hydraulikpumpeneinheit verbinden,
**dadurch gekennzeichnet, dass**
die Steuerelektronik so gestaltet ist, um das Verfahren nach Anspruch 1 oder 2 auszuführen.

4. Fahrzeug, insbesondere ein Fahrzeug, das geschleppt werden kann wie etwa ein Wohnwagen oder Anhänger, umfassend ein Fahrgestell mit, auf Wunsch, einer daran angebrachten Grundplatte, **dadurch gekennzeichnet, dass** das Fahrzeug mit einem System nach Anspruch 3 versehen ist.

## Revendications

1. Procédé pour une mise à niveau automatique d'un véhicule, en particulier d'un véhicule remorqué, tel qu'une caravane ou une remorque, lequel véhicule est muni d'un châssis avec un ou plusieurs essieux de roues, dans lequel il est fait usage d'un système hydraulique comprenant :
- deux supports de levage à commande hydraulique, qui peuvent être montés sur un essieu du véhicule ou sur le châssis à proximité d'un essieu au niveau d'emplacements qui sont disposés à une certaine distance les uns des autres dans le sens de la largeur du véhicule, ainsi qu'au moins un support de stabilisation à commande hydraulique avant qui peut être monté à proximité du côté avant du véhicule et un support de stabilisation à commande hydraulique arrière qui peut être monté à proximité du côté arrière du véhicule,
- un dispositif de pompe hydraulique comprenant :
- un réservoir de fluide hydraulique ;
- une pompe hydraulique avec moteur d'entraînement électrique associé,
- un bloc de soupape avec une ou plusieurs soupapes pouvant être actionnées électriquement,
lequel système comprend en outre une électronique de commande pour commander le moteur d'entraînement et lesdites une ou plusieurs soupapes pouvant être actionnées électriquement, et lequel système comprend en outre des lignes hydrauliques, qui relient les supports à une unité de pompe hydraulique, **caractérisé en ce que** le système comprend un capteur d'inclinaison électronique et **en ce que** partant d'une position de départ dans laquelle le véhicule est incliné vers l'avant, le procédé comprend les étapes suivantes qui sont effectuées par l'électronique de commande :
(a) actionner lesdits un ou plusieurs supports de stabilisation avant jusqu'à ce que le véhicule soit à niveau dans le sens longitudinal ;
b) actionner lesdits un ou plusieurs supports de stabilisation arrière jusqu'à ce que le véhicule soit stabilisé dans le sens longitudinal ;
c) actionner le support de levage sur le côté du véhicule qui est le plus bas, vu dans le sens de la largeur, jusqu'à ce que le véhicule soit à niveau dans le sens de la largeur, et poursuivre ledit fonctionnement jusqu'à ce que le véhicule soit légèrement levé de ce côté ;
d) actionner l'autre support de levage jusqu'à ce que le véhicule soit à niveau dans le sens de la largeur ;
e) actionner lesdits un ou plusieurs supports de stabilisation sur le côté qui est le plus bas, vu dans le sens longitudinal, jusqu'à ce que le véhicule soit à niveau dans le sens longitudinal ;
f) actionner lesdits un ou plusieurs autres supports de stabilisation jusqu'à ce que le véhicule soit stable dans le sens longitudinal.

2. Procédé selon la revendication 1, dans lequel, après mise à niveau du véhicule, un sous-programme de retour automatique est exécuté par l'électronique de commande, lequel sous-programme de retour automatique comprend les étapes suivantes consistant à:
a) lever brièvement et partiellement lesdits un ou plusieurs supports de stabilisation avant et arrière sur le côté avant et le côté arrière, en séquence si cela est souhaité,
b) lever complètement les deux supports de levage ;
c) achever la levée des supports de stabilisation avant et arrière.

3. Système hydraulique pour un véhicule, en particulier un véhicule remorqué, tel qu'une remorque ou une caravane, lequel véhicule est muni d'un châssis avec un ou plusieurs essieux de roues, lequel système comprend :
- deux supports de levage à commande hydraulique, qui peuvent être montés sur un essieu du véhicule ou sur le châssis à proximité d'un essieu au niveau d'emplacements qui sont disposés à une certaine distance les uns des autres dans le sens de la largeur du véhicule, ainsi qu'au moins un support de stabilisation à commande hydraulique avant qui peut être monté à proximité du côté avant du véhicule et un support de stabilisation à commande hydraulique arrière qui peut être monté à proximité du côté arrière du véhicule,
- un ensemble de pompe hydraulique comprenant :
- un réservoir de fluide hydraulique ;
- une pompe hydraulique avec moteur d'entraînement électrique associé,
- un bloc de soupape avec une ou plusieurs soupapes pouvant être actionnées électriquement,
lequel système comprend en outre une électronique de commande avec un capteur d'inclinaison électronique pour commander le moteur d'entraînement et lesdites une ou plusieurs soupapes pouvant être actionnées électriquement, et lequel système comprend en outre des lignes hydrauliques, qui relient les supports à l'unité de pompe hydraulique,
**caractérisé en ce que**
l'électronique de commande est configurée pour exécuter le procédé selon la revendication 1 ou 2.

4. Véhicule, en particulier un véhicule qui peut être remorqué, par exemple une caravane ou une remorque, comprenant un châssis avec, si on le souhaite, une plaque de base montée dessus, **caractérisé en ce que** le véhicule est pourvu d'un système selon la revendication 3.
